# EUROPEAN PATENT APPLICATION

(11) **EP 1 241 562 A1**
(43) Date of publication of application: **18.09.2002**
(21) Application number: 01302520.0
(22) Date of filing: 16.03.2001
(51) Int. Cl.: G06F 3/12

(54) **Controlling printing on a network**

(71) Applicant: Richler Graphics Ltd, Edgebaston, Birmingham B16 8TG (GB)
(72) Inventor: Forbes, Susan, Farnham, Surrey GU9 8HX (GB); Mayer, Amy Louise, Eaton, Berks SL4 6PS (GB)
(74) Representative: Brunner, Michael John

(57) **Abstract**

There is disclosed a method of enabling a computer network user to print a task on a printer **5** connected to the network via an associated printer server **2**. In the method a database **9** of print credit tokens is maintained on the printer server or another server connected to the network. The printer server queries the credit token database and determines, in advance of printing the task, whether the credit token database holds sufficient tokens to enable the task to be printed and, if it does, it sends the task to the printer and decrements the print credit token number held in the credit token database **9**. On a remote server, a database **8** of printer servers and associated printers is maintained and the credit token database connects to the printer server database automatically or at the instigation of a user on the network to verify the identity of the printer server **2**. The identity is verified at the printer server database **8** and print credit tokens are downloaded to the credit token database **9** to update the database of print credit tokens after verification of the identity of the printer server **2**.

## Description

The present invention relates to a method whereby a web aware computer server can be used to control the printing facilities on a computer network.

Facilities houses and service providers, amongst others, want to be able to offer hardware, software and consumable products to customers in return for a set charge per print executed, which may be either prepaid or collected on a weekly, monthly or quarterly basis. This facility has been available to the digital colour laser copier market for some years based on a page counter built in to the digital copier which increments by a unit amount each time a page is printed. This page or "click count" is then applied to a scale charge depending on the media size printed and volume contracted. It has not been possible hitherto apply click charges to printing or marking engine machinery which does not have a built in click counter supplied by the machine manufacturer.

The present invention seeks to provide a software solution whereby print information can be sent via the Internet, an intranet, a wide area network or a local area network server to any predesignated printer. Furthermore, information regarding this printing may be stored in a database and the user may be billed at a variable or fixed rate for the amount of media used in the print job.

According to the present invention there is provided a method of enabling a computer network user to print a task on a printer connected to the network via an associated printer server, the method comprising maintaining a database of print credit tokens on the printer server or another server connected to the network; the printer server querying the credit token database and determining, in advance of printing the task, whether the credit token database holds sufficient tokens to enable the task to be printed and, if it does, sending the task to the printer and decrementing the print credit token number held in the credit token database; maintaining, on a remote server, a database of printer servers and associated printers; connecting the credit token database to the printer server database automatically or at the instigation of a user on the network; verifying the identity of the printer server at the printer server database; and downloading print credit tokens to the credit token database to update the database of print credit tokens after verification of the identity of the printer server.

The web server, when issuing a credit, allows the end user, using a proprietary client application, to release his own on-site server software with the electronic token or credit to print or otherwise utilise a service in order to print a predefined number of square metres of printed materials.

Preferably, the database of print credit tokens and the database of printer server and associated printers are a single database.

The credit token database is preferably located on a server remote from the printer server which may be the same server as that hosting the printer database server.

Each token may represent either an amount of printed material, an amount of printing ink, or an amount of paper.

Furthermore, according to a second aspect of the present invention there is provided a method of maintaining a database of print credit tokens on a server attached to a computer network to enable users to print tasks on a printer connected to a printer server on the network, the method comprising
decrementing the print credit token number held in the credit token database each time a task is printed on the printer;
maintaining, on a remote server, a database of printer servers and associated printers; and
connecting the credit token database to the printer server database automatically or at the instigation of a user on the network;
verifying the identity of the printer server at the printer server database; and
downloading print credit tokens to the credit token database to update the database of print credit tokens after verification of the identity of the printer server.

The unit value of each token may also be downloaded to update the credit token database

Preferably the printer server database queries the printer server for an identity string and compares this string against a database of authorised identities; and if the identity is found within the database then the printer server database enables the credit token database to buy digital print credit tokens, receive information on revised pricing plans or order additional consumables.

The purchase of print credit tokens may be achieved either by authorising payment from an account associated with the respective printer or by authorising payment via credit card payment or by authorising payment via account billing.

Preferably verification of the identity of the printer server is achieved by use of a hardware key, or dongle attached to the printer server.

Preferably the computer network is any one of a local area network, intranet, wide area networks, and the Internet.

An error recovery system may also be provided wherein a credit token is restored to the token credit database if the print fails to complete.

A first method of calculating the amount of paper and ink used makes use of a file formed in a printer server on the basis of pre-set information given by the customer print application regarding the width of print, the inks used and the dots per inch (dpi) of print desired. When the customer wishes to print a specific size of print this information is sent to the local printer server which performs the calculation of the amount of each ink colour which as been used by a particular size of print.

A second method of calculating the amount of paper and ink used is applicable where post-printing account billing is in operation. According to this method the printer itself feeds back information to the printer server about the amount of ink and linear measurement of the amount of paper being used. The local server then takes this information and again performs the calculation of the amount of ink used by the particular print job.

A third method of calculating the amount of paper and ink used takes into account the number and size of pages, whether they are duplexed or single sided and the amount of toner or ink required.

For the customer's information a list of tokens and their prices may be displayed from the database on the remote server. The customer may opt for one of the billing mechanisms available to him; having selected the tokens for the amount of credit of which he wishes to make use. This credit value is either billed to him or he buys a token with his credit card. The tokens are then credited to the customer's account on the remote server. Post interpretation and before printing, the local server checks the customer's token account and reconciles the token value with the calculated media consumption value, if the account has sufficient tokens then the print goes ahead. If is it less, a message will pop up at the user's site to alert him to buy more credits or in the case of account billing to pay his bill in order to release further credit tokens.

Preferably, the method includes restoring a credit token to the credit token database if the print fails to complete.

To enable a centralised service to be provided to facilities providers, a block token issuer may be provided; and blocks of authorised credits provided to the printer server database for enabling, in turn, print credit tokens to be supplied to credit token databases.

Further details of the present invention may be understood with reference to the following diagrams, in which:
Fig. 1 is a flow diagram of a typical user set up;
Fig. 2 is a flow diagram of how the token are processed;
Fig. 3 is a flow diagram of the process flow; and
Fig. 4 is a flow diagram of the media calculator.
Fig. 5 is a flow diagram of the actions of the Web Network server.
Fig. 6 is a flow diagram of the actions of the printer server.
Fig. 7 is a flow diagram of the authorisation chain including the block token issuer.

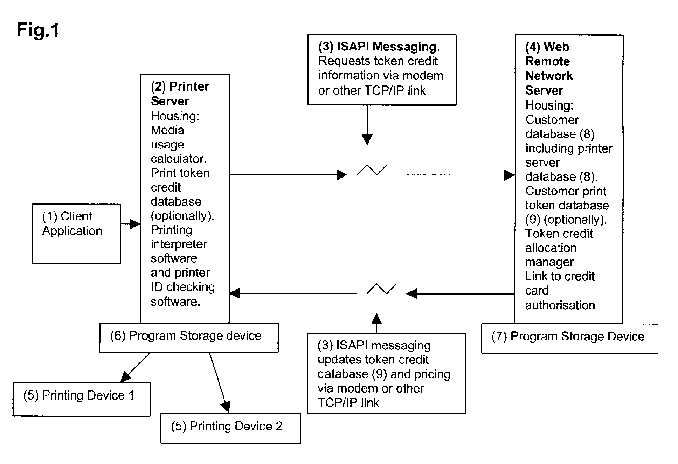

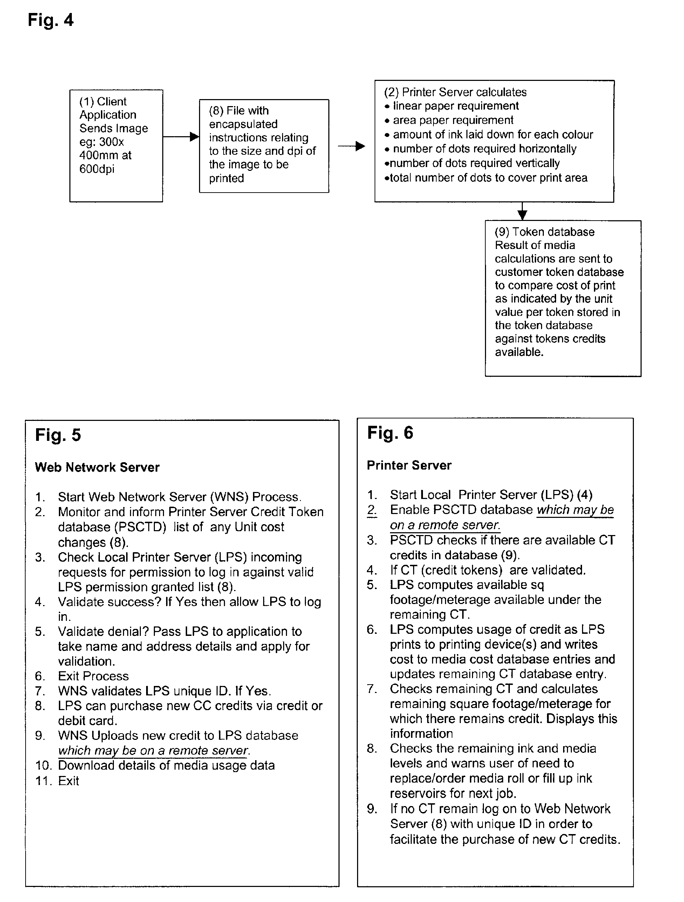

In a typical user set up shown in Fig. 1 a client software application 1 is in communication with a printer server 2 on a computer network. This printer server 2 houses a media usage calculator, print interpreter software and printer ID checking software. The printer server 2 is in communication with the printing devices 5 and also, by an ISAPI (Internet Server Application Interface) messaging protocol 3, it is in communication through the Internet with a web remote network server 4. The web remote network server 4 houses a customer database 8 including information on all authorised identities, token credit allocation management, and which incorporates a database 8' of printer servers and associated printers, and a link to appropriate credit card authorisation software. Furthermore, it contain the printer server -customer print credit token database 9 (see Figure 4). Alternatively, the printer server 2 (less preferably) or another server (not shown) on the local network to which the printer server 2 is attached may contain the credit token database. The web remote network server 4 communicates via ISAPI messaging 3 and across this messaging the printer server 2 requests credit token information and the web remote network server 4 updates the credit token database 9 with credit token and price information. This communication takes place via a modem or other TCP/IP link through the Internet. Both of the servers 2, 4 are supplied with program storage devices 6, 7.

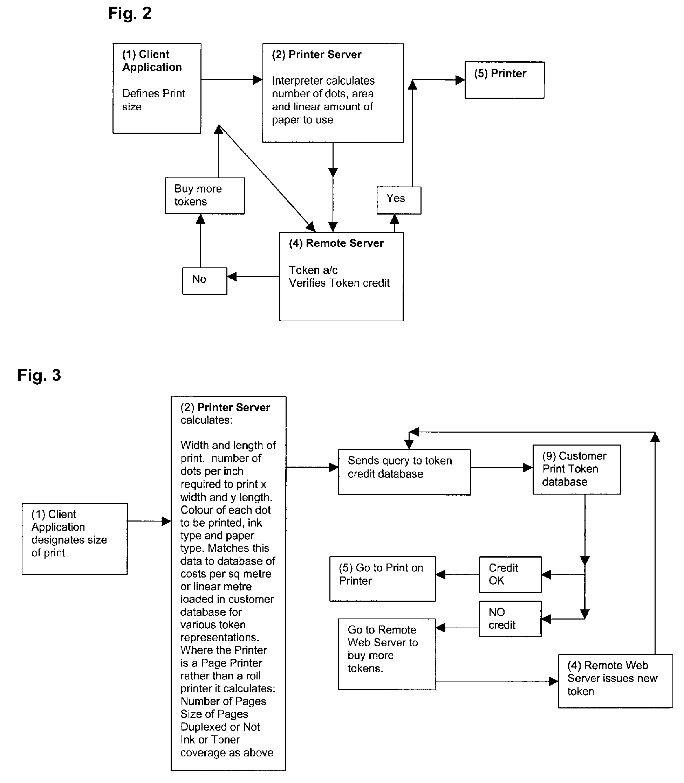

With reference to the flow diagram in Fig. 2, the credit token process operates as follows: the client application 1 defines the print size and communicates this information to the printer server 2. The printer server 2 in turn interprets this information for the number of dots, the area and linear amount of paper used as well as the paper and ink type. This information is then communicated to the remote server 4 which in turn verifies the token credit of the client application on the credit token database 9. If there is insufficient credit to carry out the printing job the client is advised to buy more credit tokens via the printer server database 8'. This may happen automatically through use of the link to appropriate credit card authorisation software. When the remote server 4 verifies that there is sufficient token credit in the client's credit token account the print information may be sent to the printer 5.

Fig. 3 shows the entire flow process including the token payment and verification process discussed in Fig. 2. The flow process occurs as follows: the client application 1 designates the size of the print job and this information is sent to the printer server 2. The printer server 2 in turn calculates with width and length of the print and, the number of dots per inch required for the given size of job, because of each dot to be printed, the ink and paper type to be used. Furthermore, the printer server 2 matches this data to the database costs per square metre or linear metre in the customer database for various token representations. The printer server 2 then queries the token credit database 9 and when the token credit process according to Fig. 2 has operated successfully the job is printed.

Fig. 4 shows the operation of the media calculator on the printer server 2. The client application 1 sends information in the form of X by Y mm at Z dpi. A file 8 with encapsulated instructions relating to the size and dpi of the image to be printed is formed and thus the information is transformed to the printer server 2. The printer server 2 calculates the linear paper requirement, the area paper requirement, the amount of ink laid down for each colour, the number of dots required horizontally and vertically and total number of dots to cover the print area. The result of the media calculation is sent to the customer credit token database 9 to compare the unit value of tokens consumed by the print against the tokens available in the client application's token credit account.

The involvement of the Web Network server in the overall process may be better understood with close reference to Fig. 5.

The involvement of the printer server in the overall process may be better understood with close reference to Fig. 6.

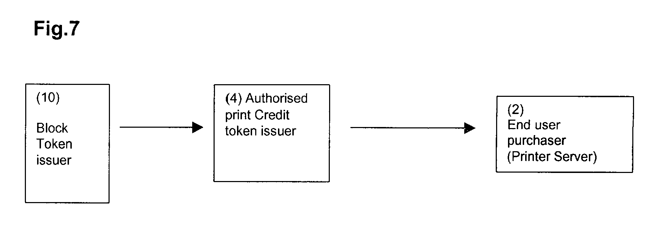

Fig. 7- shows an extension of the system which enables a centralised service to be provided to facilities providers, a block token issuer 10 is provided, and blocks of authorised credits are provided to the customer/printer server database 8 for enabling, in turn, print credit tokens to be supplied to credit token databases 9.

It may be preferable for the database of print credit tokens may be maintained on a server other than the printer server 2 as described above, particularly and advantageously, when several printers and associated printer servers are provided on the same LAN, for example.

The method includes restoring a credit token to the credit token database if the print fails to complete.

## Claims

1. A method of enabling a computer network user to print a task on a printer connected to the network via an associated printer server, the method comprising
maintaining a database of print credit tokens on the printer server or another server connected to the network;
the printer server querying the credit token database and determining, in advance of printing the task, whether the credit token database holds sufficient tokens to enable the task to be printed and, if it does, sending the task to the printer and decrementing the print credit token number held in the credit token database;
maintaining, on a remote server, a database of printer servers and associated printers;
connecting the credit token database to the printer server database automatically or at the instigation of a user on the network;
verifying the identity of the printer server at the printer server database; and
downloading print credit tokens to the credit token database to update the database of print credit tokens after verification of the identity of the printer server.

2. A method according to claim 1, wherein the credit token database and the printer server database are a single database.

3. A method according to claim 1 or claim 2, wherein the credit token database is located on a server remote from the printer server.

4. A method according to claim 3, wherein the remote server is separate from the server hosting the printer server database.

5. A method according to any of claims 1 to 4, wherein each token represents an amount of printed material.

6. A method according to claim 5, wherein each token represents a pixel of printing.

7. A method according to claim 5, wherein each token represents an amount of printing ink.

8. A method according to claim 5, wherein each token represents an amount of paper.

9. A method of maintaining a database of print credit tokens on a server attached to a computer network to enable users to print tasks on a printer connected to a printer server on the network, the method comprising
decrementing the print credit token number held in the credit token database each time a task is printed on the printer;
maintaining, on a remote server, a database of printer servers and associated printers; and
connecting the credit token database to the printer server database automatically or at the instigation of a user on the network;
verifying the identity of the printer server at the printer server database; and
downloading print credit tokens to the credit token database to update the database of print credit tokens after verification of the identity of the printer server.

10. A method according to any of claims 1 to 9, wherein
the printer server database queries the printer server for an identity string and compares this string against a database of authorised identities; and
if the identity is found within the database then the printer server database enables the credit token database to buy digital print credit tokens, receive information on revised pricing plans or order additional consumables.

11. A method according to claim 9 or claim 10, wherein the purchase of print credit tokens is achieved by authorising payment from an account associated with the respective printer.

12. A method according to claim 10, wherein purchase of print credit tokens is achieved by authorising payment via credit card payment.

13. A method according to claim 10, wherein purchase of print credit tokens is achieved by authorising payment via account billing.

14. A method according to any of claims 1 to 13, where verification of the identity of the printer server is achieved by use of a hardware key, or dongle attached to the printer server.

15. A method according to any of claims 1 to 14, wherein the computer network is any one of a local area network, intranet, wide area network, and the Internet.

16. A method according to any of claims 1 to 15, further comprising restoring a credit token to the credit token database if the print fails to complete.

17. A method in accordance with any of claims 1 to 16, further comprising providing a block token issuer; and authorising blocks of credits to the printer server database for enabling print credit tokens to be supplied to the credit token database.
